(19) Europäisches Patentamt
European Patent Office
Office européen des brevets

(11) **EP 3 521 871 A1**

(12) **EUROPEAN PATENT APPLICATION**
published in accordance with Art. 153(4) EPC

(43) Date of publication:
**07.08.2019 Bulletin 2019/32**

(51) Int Cl.:
*G02B 3/00* (2006.01)      *G02B 27/22* (2018.01)
*G03B 35/00* (2006.01)

(21) Application number: **17855423.4**

(22) Date of filing: **31.07.2017**

(86) International application number:
**PCT/JP2017/027719**

(87) International publication number:
**WO 2018/061465 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.09.2016 JP 2016190293**

(71) Applicant: **Fujifilm Corporation**
**Minato-ku**
**Tokyo 106-8620 (JP)**

(72) Inventors:
• **KATSUMOTO,Ryuichi**
  **Fujinomiya-shi, Shizuoka 418-8666 (JP)**
• **UMEMORI, Kenichi**
  **Fujinomiya-shi, Shizuoka 418-8666 (JP)**

(74) Representative: **Hoffmann Eitle**
**Patent- und Rechtsanwälte PartmbB**
**Arabellastraße 30**
**81925 München (DE)**

(54) **LENTICULAR DISPLAY BODY AND MANUFACTURING METHOD FOR LENTICULAR DISPLAY BODY**

(57)    A lenticular display has: a lenticular lens in which a plurality of convex lenses are arranged in parallel, each of the convex lenses having a convex front surface; a lenticular image provided on a back surface side of each of the convex lenses; and an anti-reflection layer provided on a back surface side of the lenticular image. The lenticular image includes a plurality of display image strips that are extracted each in a stripe shape from a plurality of display images and that are arranged at corresponding positions on the back surface side of each of the convex lenses, and a transparent-slit image strip that is provided between each pair of the plurality of display image strips that are adjacent to each other and that are extracted from the display images that differ from each other.

FIG. 1

**Description**

BACKGROUND OF THE INVENTION

1. Field of the Invention

The present disclosure relates to a lenticular display and a method of manufacturing a lenticular display.

2. Description of the Related Art

A lenticular display, which has a lenticular lens composed of a plurality of convex lenses each of which has a convex front surface and that are arranged in parallel, is known as a medium for displaying different images depending on the viewing angle.

In general, in the lenticular display, image strip groups (lenticular image), each of which is a combination of a plurality of interlaced images, are arranged on a back surface (a surface opposite to a front surface of each of the convex lenses) side of the lenticular lens. When the image strip groups are observed through the lenticular lens, one type of image or two or more types of images included in the image strip groups is/are displayed depending on the observation angle.

JP1999-095168A (JP-H11-095168A) discloses an example of such a lenticular display, which includes a lenticular sheet (lenticular lens) and a sampling image (lenticular image) that is composed of a left-eye image, a right-eye image, and a blank pixel.

JP5500478B discloses a lenticular lens that includes a plurality of cylindrical lenses (convex lenses), and display images (lenticular image) displayed in a region excluding a region near the boundary between adjacent cylindrical lenses.

SUMMARY OF THE INVENTION

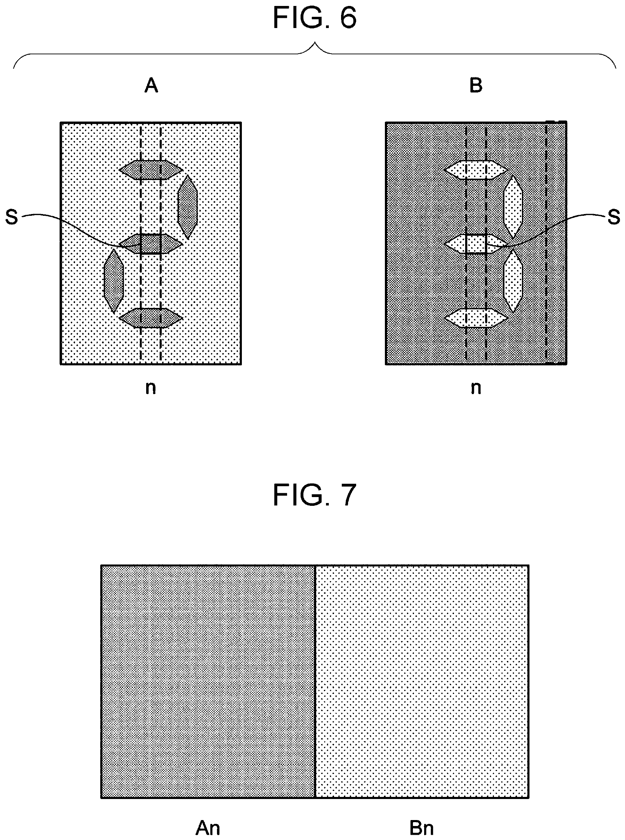

Here, for example, referring to Figs. 6 to 8, a case where a display image A (hereinafter referred to as "image A") and a display image B (hereinafter referred to as "image B"), which include characters that differ from each other, are displayed by using one lenticular display will be described.

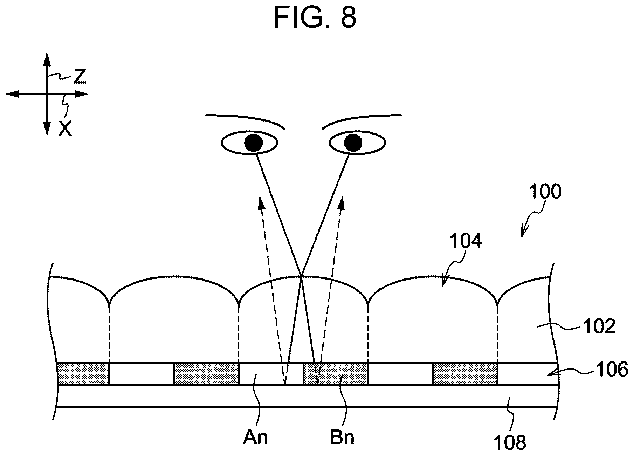

As shown in Fig. 8, a lenticular display 100 has a lenticular lens 104 that is composed of a plurality of convex lenses 102 each of which has a convex front surface. On the back surface side (lower side in Fig. 8) of the lenticular lens 104, display image strips An and Bn (hereinafter referred to as "image strips An and Bn") for displaying the display images A and B are arranged in parallel at corresponding positions so that the display images A and B can be switched depending on the viewing angle. The image strips An and Bn constitute a lenticular image 106.

To be specific, when the lenticular display 100 includes the lenticular lens 104 in which, for example, N pieces of convex lenses 102 (where N is an integer larger than or equal to 2) are arranged in parallel, for example, as shown in Fig. 6, in a region S under a convex lens 102 that is in the n-th position from one end in the parallel-arrangement direction of the convex lenses 102 (where n is an integer larger than or equal to 1), as shown in Fig. 7, an image strip An and an image strip Bn, which are respectively extracted by dividing each of the images A and B into stripe shapes, are arranged in parallel in an interlaced manner so as to be adjacent to each other.

As shown in Fig. 8, under each of the 1st to N-th convex lenses 102, as with the n-th convex lens 102, image strips An and Bn, which are respectively extracted from the images A and B, are arranged in parallel at corresponding positions. Depending on the viewing angle of an observer through the lenticular lens 104, the image A is displayed when the image strips An extracted from the image A are combined, or an image B is displayed when the image strips Bn extracted from the image B are combined.

Here, as shown in Fig. 8, light that has entered the lenticular lens 104 is reflected by a front surface of the lenticular image 106, and a part of the light passes through the lenticular image 106. The light that has passed through the lenticular image 106 is reflected by a front surface of an object disposed on the back surface side (lower side in Fig. 8) of the lenticular image 106 (such as a sheet of paper 108 that is affixed to the back surface of the lenticular image 106), and stray light is generated in the lenticular lens 104.

When the stray light is emitted from the lenticular lens 104 together with light reflected by the front surface of the lenticular image 106, overlapping of images A and B may occur and discrimination between the images A and B may decrease. In particular, overlapping of the images A and B is likely to occur at a position where an image observed by an observer (image that is actually seen) is switched from the image A to the image B or from the image B to the image A, that is, for example, at an angle at which the left and right eyes observe different images (the left eye sees the image A and the right eye sees the image B) as shown in Fig. 8.

The lenticular display disclosed in JP1999-095168A (JP-H11-095168A) suppresses overlapping of images by providing a blank pixel between a left-eye image and a right-eye image of the sampling image (lenticular image). However, it is difficult to suppress generation of stray light in the lenticular sheet (lenticular lens) due to light reflected on the back surface side of the sampling image (lenticular image).

Likewise, with the lenticular lens disclosed in JP5500478B, decrease in image quality due to mixing of display images is suppressed by displaying the display images (lenticular image) in a region excluding a region near the boundary between adjacent cylindrical lenses. However, it is difficult to suppress generation of stray light in the lenticular lens due to light reflected on the back surface side of the display image (lenticular image).

In consideration of the above facts, it is an object of the present disclosure to provide a lenticular display and a method of manufacturing a lenticular display each of which can suppress decrease of ability in discriminating between display images due to stray light.

According to a first aspect of the present disclosure, a lenticular display has: a lenticular lens in which a plurality of convex lenses are arranged in parallel, each of the convex lenses having a convex front surface; a lenticular image provided on a back surface side of each of the convex lenses, the back surface being a surface of the convex lens opposite to the front surface; and an anti-reflection layer provided on a back surface side of the lenticular image, the back surface being a surface of the lenticular image opposite to a front surface of the lenticular image facing the lenticular lens. The lenticular image includes a plurality of display image strips that are extracted each in a stripe shape from a plurality of display images and that are arranged at corresponding positions on the back surface side of each of the convex lenses, and a transparent-slit image strip that is provided between each pair of the plurality of display image strips that are adjacent to each other and that are extracted from the display images that differ from each other.

With the structure described above, decrease of ability in discriminating between the display images can be suppressed because of the following: generation of stray light is suppressed by reducing reflection of light that has entered the convex lens by using the anti-reflection layer, which is provided on the back surface side of the lenticular image; and overlapping of the display images is suppressed by using the transparent-slit image strip, which is provided between each pair of the display image strips that are adjacent to each other.

In the present disclosure, the term "display image" refers to an image to be displayed by the lenticular display, that is, an image to be recognized by an observer when the observer observes the lenticular display from the lenticular lens side. In the present disclosure, the term "transparent" means a property of having a total light transmittance of 80% or higher for light in the wavelength range of 400 to 700 nm.

In the present disclosure, "a lenticular image provided on a back surface side of each of the convex lenses, the back surface being a surface of the convex lens opposite to the front surface" includes, in addition to a structure in which the lenticular image is disposed in contact with the back surface of the convex lens or separated from the back surface, a structure in which the lenticular image is directly formed on the convex lens (lenticular lens).

Likewise, in the present disclosure, "an anti-reflection layer provided on a back surface side of the lenticular image, the back surface being a surface of the lenticular image opposite to a front surface of the lenticular image facing the lenticular lens" includes, in addition to a structure in which the anti-reflection layer is disposed in contact with the back surface of the lenticular image or separated from the back surface, a structure in which the anti-reflection layer is directly formed on the back surface of the lenticular image.

According to a second aspect of the present disclosure, in the lenticular display according to the first aspect, a residual density of the display images is 0% or higher and 40% or lower.

With the structure described above, because the residual density of the display images is 0% or higher and 40% or lower, compared with a case where the residual density is higher than 40%, the viewability of the display image can be further improved.

Here, in the present disclosure, the term "residual density" refers to a value that is obtained by: capturing an observation image from a plurality of angles on the front surface side of the lenticular lens by using a digital camera; binarizing the captured observation image; quantizing, into 256-level digital data, the density of each of a display image strip An (for example, an image strip having a black color of uniform density) that is supposed to be seen at any one of the plurality of angles and a display image strip Bn (for example, an image strip having a white color of uniform density) that is not supposed to be seen at the angle; and performing calculation by using the following equation (1). In the present disclosure, the term "observation image" refers to an image that is actually seen by an observer when the observer sees the display images (display image strips) through the lenticular lens.

$$\text{Residual Density (\%)} = (\text{the density of the display image strip Bn})/(\text{the density of the display image strip An}) \quad (1)$$

According to a third aspect of the present disclosure, in the lenticular display according to the first aspect or the second aspect, a width of the transparent-slit image strip in an arrangement direction is 5% or larger and 50% or smaller of a width of each of the convex lenses in a parallel-arrangement direction.

With the structure described above, because the width of the transparent-slit image strip is 5% or larger of the width of the convex lens, compared with a structure in which the width of the transparent-slit image strip is smaller than 5% of the width of the convex lens, overlapping of the display images can be suppressed. Moreover, because the width of the transparent-slit image strip is 50% or smaller of the width of the convex lens, compared with a structure in which the width of the transparent-slit image strip is larger than 50% of the width of the convex lens, the continuity of the plurality of display images can be maintained.

According to a fourth aspect of the present disclosure, in the lenticular display according to any one of the first to third aspects, the plurality of display images each include a character.

When display images each include a character, readability of the display images is particularly necessary. With the structure described above, because the lenticular display is provided with the anti-reflection layer and the transparent-slit image strip, decrease of ability in discriminating between the display images can be suppressed, and the characters can be easily recognized.

According to a fifth aspect of the present disclosure, in the lenticular display according to any one of the first to fourth aspects, the lenticular image is formed on a recording medium that is bonded to a back surface of the lenticular lens.

With the structure described above, because the lenticular image is formed on the recording medium that is bonded to the back surface of the lenticular lens, compared with a structure in which the lenticular image is directly formed on the lenticular lens, the lenticular image can be easily formed.

According to a sixth aspect of the present disclosure, in the lenticular display according to any one of the first to fourth aspects, the lenticular image is formed on a back surface of the lenticular lens.

With the structure described above, because the lenticular image is directly formed on the back surface of the lenticular lens, compared with a structure in which a recording medium on which the lenticular image has been formed is bonded to the lenticular lens, the lenticular image can be formed at low costs.

According to a seventh aspect of the present disclosure, a method of manufacturing a lenticular display includes a step of forming a lenticular image by arranging a plurality of display image strips, which are extracted each in a stripe shape from a plurality of display images, at corresponding positions and by providing a transparent-slit image strip between each pair of the plurality of display image strips that are adjacent to each other and that are extracted from the display images that differ from each other; a step of providing the lenticular image on a back surface side of a lenticular lens in which a plurality of convex lenses are arranged in parallel, each of the convex lenses having a convex front surface, the back surface being a surface of the lenticular lens opposite to the front surface; and a step of providing an anti-reflection layer on a back surface side of the lenticular image, the back surface being a surface of the lenticular image opposite to a front surface of the lenticular image facing the lenticular lens.

With the method described above, decrease of ability in discriminating between display images can be suppressed because of the following: generation of stray light is suppressed by reducing reflection of light that has entered the convex lens by providing the anti-reflection layer on the back surface side of the lenticular image; and overlapping of the display images is suppressed by providing the transparent-slit image strip between each pair of the display image strips that are adjacent to each other.

According to an eighth aspect of the present disclosure, in the method of manufacturing a lenticular display according to the seventh aspect, a width of the transparent-slit image strip in an arrangement direction is 5% or larger and 50% or smaller of a width of each of the convex lenses in a parallel-arrangement direction.

With the method described above, because the width of the transparent-slit image strip is 5% or larger of the width of the convex lens, compared with a structure in which the width of the transparent-slit image strip is smaller than 5% of the width of the convex lens, overlapping of the display images can be suppressed. Moreover, because the width of the transparent-slit image strip is 50% or smaller of the width of the convex lens, compared with a structure in which the width of the transparent-slit image strip is larger than 50% of the width of the convex lens, the continuity of the plurality of display images can be maintained.

According to a ninth aspect of the present disclosure, in the method of manufacturing a lenticular display according to the seventh aspect or the eighth aspect, the plurality of display images each include a character.

When display images each include a character, readability of the display images is particularly necessary. With the structure described above, because the lenticular display is provided with the anti-reflection layer and the transparent-slit image strip, decrease of ability in discriminating between the display images can be suppressed, and the characters can be easily recognized.

According to a tenth aspect of the present disclosure, in the method of manufacturing a lenticular display according to any one of the seventh to ninth aspects, the lenticular image is formed on a front surface of a recording medium, and the front surface of the recording medium and the back surface of the lenticular lens are affixed to each other.

With the method described above, the lenticular display can be manufactured by affixing the recording medium, on which the lenticular image has been formed, and the lenticular lens to each other. Therefore, compared with a method in which the lenticular image is formed on the lenticular lens, the lenticular image can be easily formed.

According to an eleventh aspect of the present disclosure, in the method of manufacturing a lenticular display according to any one of the seventh to ninth aspects, the lenticular image is formed on the back surface of the lenticular lens.

With the method described above, the lenticular display can be manufactured by directly forming the lenticular image on the back surface of the lenticular lens. Therefore, compared with a method in which a recording medium on which the lenticular image has been formed is bonded to a lenticular lens, the lenticular image can be formed at low costs.

With the present disclosure, decrease of ability in discriminating between display images due to stray light can be suppressed.

BRIEF DESCRIPTION OF THE DRAWINGS

Fig. 1 is a perspective view illustrating the structure of a lenticular display according to a first embodiment;
Fig. 2 shows a side view and a plan view illustrating the structure of the lenticular display according to the first embodiment;
Fig. 3 is an exploded view of the lenticular display shown in Fig. 2;
Fig. 4 is a side view illustrating the structure in the thickness direction of a lenticular display according to a second embodiment;
Fig. 5 is a side view illustrating the structure in the thickness direction of a lenticular display according to a third embodiment;
Fig. 6 illustrates two display images that are individually displayed by an existing lenticular display;
Fig. 7 illustrates image strip groups in a region S in Fig. 6; and
Fig. 8 is a side view illustrating the structure in the thickness direction of an existing lenticular display including the image strip groups shown in Fig. 7.

DESCRIPTION OF THE PREFERRED EMBODIMENTS

First Embodiment

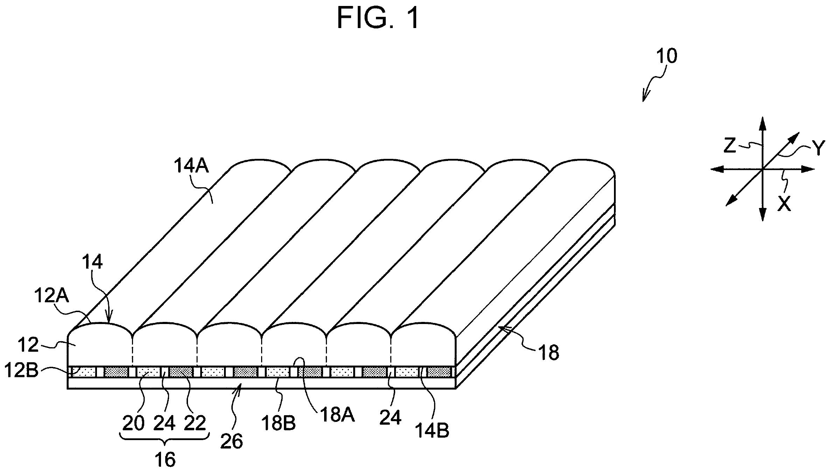

Hereinafter, referring to Figs. 1 to 3, a lenticular display according to a first embodiment of the present disclosure will be described. In the figures, the X-direction is the width direction of the lenticular display, the Y-direction is the length direction (longitudinal direction) of the lenticular display, and the Z-direction is the thickness direction of the lenticular display.

Structure of Lenticular Lens

As shown in Fig. 1, a lenticular display 10 according to the present embodiment includes, for example, a lenticular lens 14 composed of a plurality of convex lenses 12. Each of the convex lenses 12 is a cylindrical lens having a substantially semi-cylindrical shape. A front surface 12A (upper surface in Fig. 1) of the convex lens 12 is a spherically convex surface, and a back surface 12B (lower surface in Fig. 1), which is opposite to the front surface 12A, of the convex lens 12 is a horizontal surface. The convex lenses 12 are arranged in parallel in the width direction (X-direction).

The lenticular lens 14, that is, each of the convex lenses 12, is made of a light-transmissive resin material. Examples of the resin material used include a polymethyl methacrylate resin (PMMA), a polycarbonate resin, a polystyrene resin, a methacrylate-styrene copolymer resin (MS resin), an acrylonitrile-styrene copolymer resin (AS resin), a polypropylene resin, a polyethylene resin, a polyethylene terephthalate resin, a glycol-modified polyethylene terephthalate resin, a polyvinyl chloride resin (PVC), a thermoplastic elastomer, a copolymer of any of the these, and a cycloolefin polymer.

In consideration of ease of melt extrusion, preferably, for example, any of the following resins, each of which has a low melt viscosity, is used: a polymethyl methacrylate resin (PMMA), a polycarbonate resin, a polystyrene resin, a methacrylate-styrene copolymer resin (MS resin), a polyethylene resin, a polyethylene terephthalate resin, and a glycol-modified polyethylene terephthalate resin.

More preferably, a glycol-modified polyethylene terephthalate resin is used, because a lens shape formed on the surface of an embossing roller can be easily transferred and a crack is not likely to be formed in a lens layer during embossing. The lenticular lens 14 may include a plurality of resin materials.

In view of printability, workability, and image resolution, the width (lens pitch) of the convex lens 12 is preferably larger than or equal to 50 LPI (lines per inch, the number of lenses per inch (2.54 cm)) and smaller than or equal to 300 LPI, and, more preferably, larger than or equal to 100 LPI and smaller than or equal to 200 LPI. A lenticular image 16 is provided on a back surface 12B side of the convex lens 12, that is, on the back surface 14B side of the lenticular lens 14.

To be specific, the lenticular image 16 is formed (printed) on a front surface 18A of a film 18, which is a recording medium made of a transparent resin. The front surface 18A of the film 18 is affixed to the back surface 14B of the lenticular lens 14 via a transparent bonding layer (not shown).

Structure of Lenticular Image

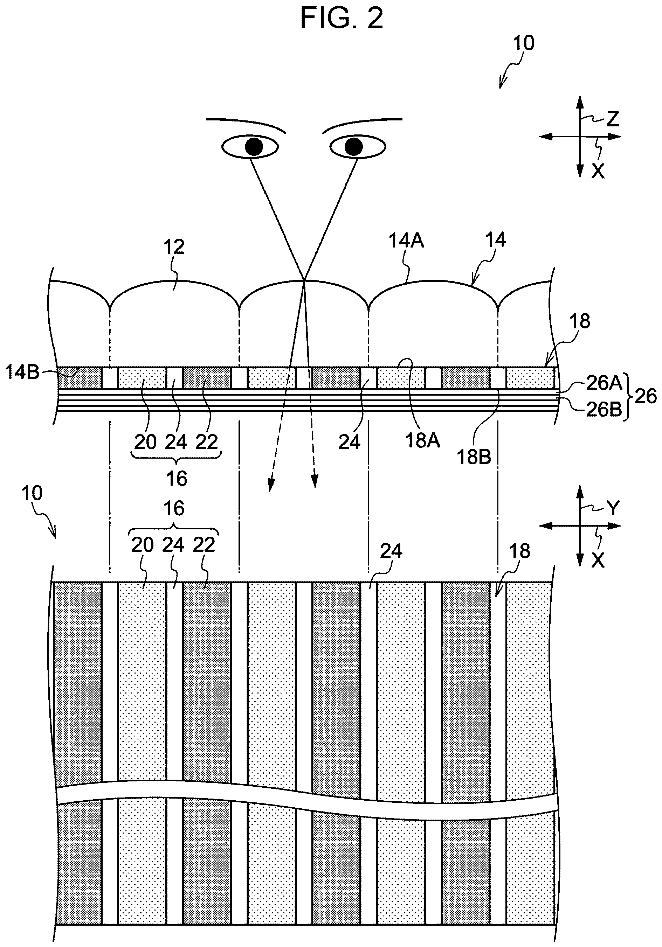

For example, the lenticular image 16 is composed of image strip groups that include the display image strips 20 and 22 for individually displaying two display images. To be specific, as shown in Fig. 2, the display image strips 20 and 22, which are extracted each in a stripe shape from the display images, are arranged at corresponding positions pairwise for each convex lens 12.

The display image strips 20 and 22 extend in the longitudinal direction (Y-direction) of the lenticular lens 14. The display image strips 20 and 22 are alternately arranged with spaces therebetween in the width direction (X-direction) of the lenticular lens 14. A transparent-slit image strip 24 of the lenticular image 16 is disposed between each pair of the display image strips 20 and 22 that are adjacent to each other.

The widths of the plurality of display image strips 20 and 22 in the arrangement direction (X-direction) are substantially the same, and the widths of the plurality of transparent-slit image strips 24 in the arrangement direction (X-direction) are also substantially the same. If the width of each of the transparent-slit image strips 24 in the arrangement direction (X-direction) is too small, it is difficult to suppress overlapping of the display image strips 20 and 22 (display images). If the width is too large, it is difficult to maintain the continuity of the display image strips 20 and 22 (display images).

Therefore, the width of each of the transparent-slit image strips 24 in the arrangement direction (X-direction) is preferably 5% or larger and 50% or smaller, more preferably 10% or larger and 30% or smaller, and most preferably 12% or larger and 20% or smaller of the width of the convex lens 12 in the parallel-arrangement direction (X-direction). The widths of the transparent-slit image strips 24 in the arrangement direction (X-direction) may be different from each other.

In the present embodiment, the display image strips 20 and 22 (display images) each include a character. An anti-reflection layer 26 is provided on the back surface side of the lenticular image 16, that is, on a back surface 18B side of the film 18, the back surface 18B being opposite to the front surface 18A.

Structure of Anti-Reflection Layer

The anti-reflection layer 26 is a layer having a low reflectance over the entire visible spectrum of 400 nm to 700 nm (wide-band low reflectance). The material of the anti-reflection layer is not particularly limited. An organic or an inorganic material can be used, and a commercially available anti-reflection film may be used.

Examples of an organic anti-reflection film include DUV 30 series and DUV-40 series made by Brewer Science, Inc.; AR-2, AR-3, and AR-5 made by Shipley Company; and ARC series made by Nissan Chemical Corporation. Examples of the material of an inorganic anti-reflection film include titanium dioxide, titanium nitride, chromium oxide, niobium oxide, tantalum oxide, carbon, silicon dioxide, and amorphous silicon.

The anti-reflection layer may be a single layer or a multilayer. When the anti-reflection layer has a multilayer structure, a plurality of layers that include different materials may be used in combination. For example, as shown in Fig. 2, the anti-reflection layer may be a multilayer film in which a plurality of layers (in the present embodiment, four layers), which are high-refractive-index films 26A including an inorganic material and low-refractive-index films 26B including an inorganic material, are alternately stacked.

The term "high-refractive-index film" refers to a film that has a refractive index of 1.7 or higher for light having a wavelength of 500 nm, and that includes, for example, titanium oxide or niobium oxide, as an inorganic material. The term "low-refractive-index film" refers to a film that has a refractive index lower than 1.7 for light having a wavelength of 500 nm, and that includes, for example, silicon dioxide (silica) as an inorganic material.

The anti-reflection layer 26 is vapor-deposited over the entirety of the back surface 18B of the film 18 by using a vacuum deposition method. The material and the thickness of the anti-reflection layer 26 are not particularly limited, and may be set in accordance with a required level of reflectance. For example, in the present disclosure, a stack of titanium-oxide-including layers/silicon-dioxide-including layers is used as the an inorganic multilayer film 1, and a stack of niobium-pentoxide-including layers/silicon-dioxide-including layers is used as an inorganic multilayer film 2.

In particular, preferably, the material and the thickness of the anti-reflection layer 26, and the width of the transparent-slit image strip 24 are set so that the residual density of the display image strips 20 and 22 (display images) is 0% or higher and 40% or lower when the lenticular image 16 is observed from a front surface 12A side of the convex lens 12, that is, the front surface 14A side of the lenticular lens 14. More preferably, the residual density is 30% or lower, and most preferably 28% or lower.

Method of Manufacturing Lenticular Display

When manufacturing the lenticular display 10, first, for example, the display image strips 20 and 22 (the display image strips An and Bn in Fig. 7) are extracted by respectively dividing the display image A and the display image B shown in Fig. 6 into stripe shapes.

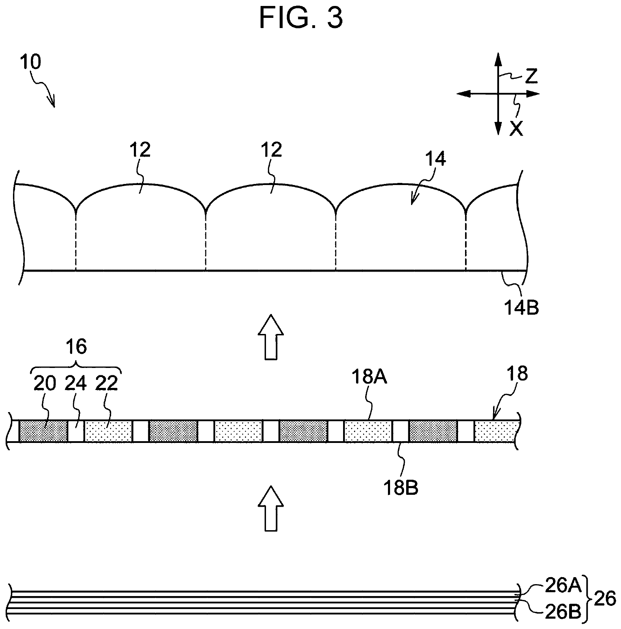

Then, as shown in Fig. 3, the display image strips 20 and 22 are formed on the transparent film 18 by printing the display image strips 20 and 22 at corresponding positions on the front surface 18A of the film 18 by using an inkjet method. The method of printing the display image strips 20 and 22 is not limited to an inkjet method, and an offset printing method, an electrophotographic method, or the like may be used. An offset printing method and an inkjet method are preferably used, in view of characteristics such as printing precision and suitability for wide-variety small-lot production.

When forming the display image strips 20 and 22 on the film 18, the transparent-slit image strips 24 are formed between the display image strips 20 and the display image strips 22 by disposing the display image strips 20 and 22 with distances therebetween.

That is, in the lenticular display 10 according to the present embodiment, the transparent-slit image strips 24 are formed by providing the film 18 with regions in which no display image strips are disposed. Through the above process, the lenticular image 16, which includes the display image strips 20 and 22 and the transparent-slit image strips 24, is formed.

Next, the lenticular image 16 is provided on the back surface14B side of the lenticular lens 14 by affixing the front surface 18A of the film 18 to the back surface14B of the lenticular lens 14 via a transparent bonding layer (not shown). The anti-reflection layer 26 is provided on the back surface side of the lenticular image 16 by vapor-depositing the anti-reflection layer 26 on the back surface 18B of the film 18. Through the above process, the lenticular display 10 is manufactured.

Functions and Effects

As shown in Fig. 2, an observer observes the lenticular image 16 from the front surface 14A side of the lenticular lens 14 through the lenticular lens 14. At this time, with the present embodiment, because the anti-reflection layer 26 is provided on the back surface side of the lenticular image 16, reflection of light that has entered the convex lens 12 is suppressed by the anti-reflection layer 26, and thereby generation of stray light in the lenticular lens 14 is suppressed.

In the present embodiment, the transparent-slit image strip 24 is provided between each pair of the display image strips 20 and 22 that are adjacent to each other. Therefore, even if different images are observed with the left and right eyes (for example, an image of the display image strip 20 with the left eye and an image of the transparent-slit image strip 24 with the right eye) at a position where an image observed by an observer switches, overlapping of the images is suppressed, because the image of the transparent-slit image strip 24 is transparent.

That is, by providing the transparent-slit image strip 24, overlapping of a half of the image of the display image strip 20 and a half the image of the display image strip 22 occurs only negligibly or does not occur. Therefore, overlapping of the display image strips 20 and 22 (display images) can be suppressed, and decrease of ability in discriminating between the display image strips 20 and 22 (display images) can be suppressed.

In the present embodiment, readability is particularly necessary, because the display image strips 20 and 22 (display images) each include a character. Because decrease of ability in discriminating between the display image strips 20 and 22 is suppressed, the characters can be easily recognized.

Moreover, with the present embodiment, by setting the width of the transparent-slit image strip 24 in the arrangement direction to be 5% or larger of the width of the convex lens 12 in the parallel-arrangement direction, overlapping of the image of the display image strip 20 and the image of the display image strip 22 can be further suppressed by the transparent-slit image strip 24. Furthermore, by setting the width of the transparent-slit image strip 24 in the arrangement direction to be 50% or smaller of the width of the convex lens in the parallel-arrangement direction, continuity of the display image strips 20 and 22 can be further maintained.

With the present embodiment, the lenticular image 16 is formed on the film 18, which is bonded to the back surface14B of the lenticular lens 14. Therefore, compared with a structure in which the lenticular image 16 is directly formed on the lenticular lens 14, the lenticular image 16 can be easily formed.

With the present embodiment, the anti-reflection layer 26 is formed by using a vacuum deposition method. Therefore, compared with a structure in which the anti-reflection layer 26 is formed on the back surface 18B of the film 18 by application or bonding, the anti-reflection layer 26 does not easily peel off, and the anti-reflection layer 26 can be formed with high precision.

With the present embodiment, by setting the material and the thickness of the anti-reflection layer 26 and the width of the transparent-slit image strip 24 so that the residual density of the display image strips 20 and 22 is 0% or higher and 40% or lower, the viewability of the display image strips 20 and 22 can be further improved.

Second Embodiment

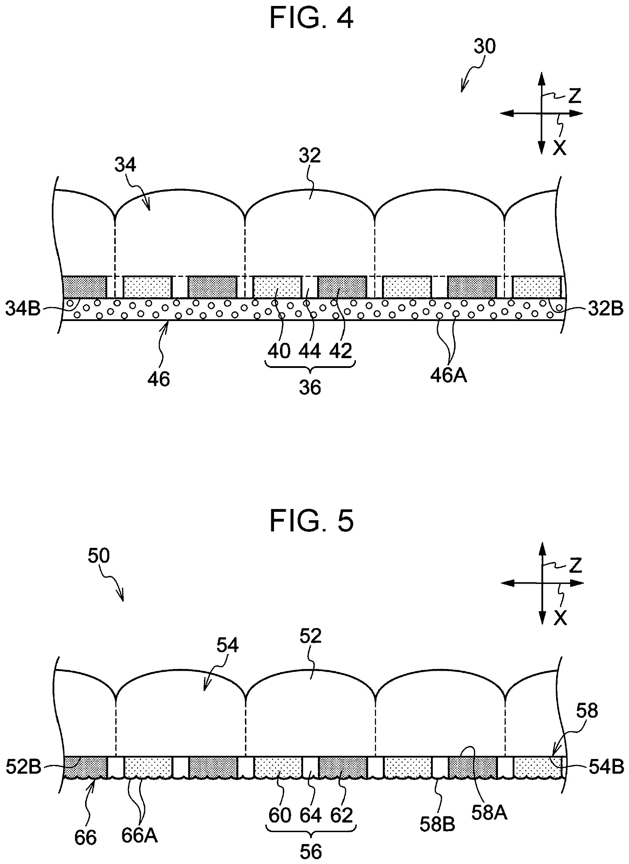

Hereinafter, referring to Fig. 4, a lenticular display according to a second embodiment of the present disclosure will be described. Description of elements of the second embodiment that are the same as those of the first embodiment will be omitted as far as possible.

Structure

As shown in Fig. 4, as with the lenticular display 10 according to the first embodiment, a lenticular display 30 according to the present embodiment includes a lenticular lens 34 composed of a plurality of convex lenses 32. Each of the convex lenses 32 (the lenticular lens 34) is made of a transparent resin material.

A lenticular image 36 is provided on a back surface 32B side of the convex lens 32, that is, on a back surface 34B side of the lenticular lens 34. To be specific, image strip groups including display image strips 40 and 42 of the lenticular image 36 are directly formed (printed) on the back surface 34B of the lenticular lens 34.

The display image strips 40 and 42 are alternately arranged with spaces therebetween in the width direction (X-direction) of the lenticular lens 34. A transparent-slit image strip 44 of the lenticular image 36 is disposed between each pair of the display image strips 40 and 42 that are adjacent to each other. An anti-reflection layer 46 is provided on the back surface side of the lenticular image 36, that is, on the back surface 34B side of the lenticular lens 34.

For example, the anti-reflection layer 46 is made from a single-layer film that includes a large number of silicon dioxide particles each having a hollow portion, that is, hollow silica particles 46A. The anti-reflection layer 46 is formed by applying a coating agent including the hollow silica particles 46A to the entirety of the back surface 34B of the lenticular lens 34.

Functions and Effects

With the present embodiment, the lenticular image 36 is directly formed (printed) on the back surface 34B of the lenticular lens 34. Therefore, compared with a structure in which a recording medium on which the lenticular image 36 has been formed is bonded to the lenticular lens 34, the number of components and the number of working steps can be reduced, and the lenticular image 36 can be formed at low costs.

With the present embodiment, the anti-reflection layer 46 is formed on the back surface 34B of the lenticular lens 34 by applying a coating agent including the hollow silica particles 46A. Therefore, compared with a structure in which the anti-reflection layer 46 is formed by using a vacuum deposition method or the like, the anti-reflection layer 46 can be easily formed.

Third Embodiment

Hereinafter, referring to Fig. 5, a lenticular display according to a third embodiment of the present disclosure will be described. Descriptions of elements of the third embodiment that are the same as those of the first embodiment and the second embodiment will be omitted. Structure

As shown in Fig. 5, a lenticular display 50 according to the present embodiment includes a lenticular lens 54 composed of a plurality of convex lenses 52, as with the lenticular displays 10 and 30 according to the first embodiment and the second embodiment.

A lenticular image 56 is provided on a back surface 52B side of the convex lens 52, that is, on a back surface 54B side of the lenticular lens 54. To be specific, image strip groups including display image strips 60 and 62 of the lenticular image 56 are formed (printed) on a front surface 58A of a film 58, which is a recording medium made of a transparent resin. The front surface 58A of the film 58 is affixed to the back surface 54B of the lenticular lens 54 via a bonding layer (not shown).

The display image strips 60 and 62 are alternately arranged with spaces therebetween in the width direction (X-direction) of the lenticular lens 54. A transparent-slit image strip 64 of the lenticular image 56 is disposed between each pair of the display image strips 60 and 62 that are adjacent to each other. An anti-reflection layer 66 is provided on the back surface side of the lenticular image 56, that is, on a back surface 58B side of the film 58.

The anti-reflection layer 66 is formed on the back surface 58B of the film 58 and is composed of a fine recess-protrusion structure in which the distance between protrusions 66A that are adjacent to each other is smaller than or equal to the wavelength of visible light (for example, about 0.1 $\mu$m). For example, the recess-protrusion structure is formed by, after forming the lenticular image 56 on the front surface 58A of the film 58, pressing a mold, whose surface has a recess-protrusion shape, against the back surface 58B of the film 58 and thereby transferring the recess-protrusion shape to the film 58.

Functions and Effects

With the present embodiment, the anti-reflection layer 66 is provided on the film 58 by forming a fine recess-protrusion structure on the back surface 58B of the film 58. Therefore, compared with a structure in which the anti-reflection layer 66 is formed by using a vacuum deposition method or the like, the anti-reflection layer 66 can be easily formed at low costs.

Other Embodiments

The present disclosure is not limited to the embodiments described above as examples, and various embodiments are possible within the scope of the present disclosure. The embodiments may be combined as appropriate.

For example, in the embodiments described above, one of each of the display image strips 20, 22, 40, 42, 60, and 62 is arranged below a corresponding one of the convex lenses 12, 32, and 52. However, a plurality of each of the display image strips 20, 22, 40, 42, 60, and 62 may be arranged below a corresponding one of the convex lens 12, 32, and 52. By increasing the number of display image strips that are arranged below each of the convex lenses 12, 32, and 52, resolution can be increased.

In the embodiments described above, the lenticular displays 10, 30, and 50 are each structured to display two types of display images. However, the lenticular displays 10, 30, and 50 each may be structured to display three or more types of display images.

In the first and third embodiments, the resin films 18 and 58 are each used as a recording medium. However, it is sufficient that a recording medium is transparent. For example, the recording medium may be made of glass. In the third embodiment, the anti-reflection layer 66 is formed on the back surface 58B of the film 58. However, the anti-reflection layer 66 may be formed on the back surface 58B side of the film 58 by bonding another film, on which a fine recess-protrusion structure has been formed, to the back surface 58B of the film 58.

For example, the anti-reflection layers 26 and 66 may be disposed so as to be separated from the back surfaces 18B and 58B of the films 18 and 58 by disposing the anti-reflection layers 26 and 66 via other resin layers between the anti-reflection layers 26 and 66 and the back surfaces 18B and 58B of the films 18 and 58. The structures of the anti-reflection layers 26, 46, and 66 are not limited to those in the embodiments described above, and other known anti-reflection layers may be used.

For example, in the first embodiment, the transparent-slit image strip 24 is formed by providing a region in which no image strip is disposed between each pair of the display image strips 20 and 22 printed on the film 18. However, a method of forming the transparent-slit image strip 24 is not limited to that in the embodiment. For example, the transparent-slit image strip 24 may be formed by using a method that includes: arranging a film on which the display image strips 20 have been printed and a film on which the display image strips 22 have been printed with gaps therebetween; and filling the gaps between the films with a transparent resin material.

The transparent-slit image strips need not be provided between all pairs of the display image strips 20 and 22, 40 and 42, and 60 and 62. For example, the transparent-slit image strips need not be formed in regions where the colors of the display image strips 20 and 22, 40 and 42, and 60 and 62 are respectively the same, that is, in regions where the color does not change when the display image strips 20 and 22, 40 and 42, and 60 and 62 are respectively switched.

In the first embodiment, the convex lens 12 has a spherical front surface 12A. However, it is sufficient that the convex lens 12 has a convex front surface 12A, and, for example, the front surface 12A may be non-spherical. For example, the convex lens 12 may have a triangular cross-sectional shape.

EXAMPLES

Hereinafter, Examples 1 to 12 of the present disclosure and comparative examples 1 to 4 will be specifically described. However, the present disclosure is not limited to the Examples described below. Here, the image viewability (visibility) of the Examples and comparative examples were visually evaluated and graded in five levels from A to E, and grades A to C were determined as in an allowable range as a product. Table 1 shows the evaluation results.

Table 1

| Examples | Lenticular Lens | | Lenticular Image | | | Anti-Reflection Layer | | Evaluation | |
| --- | --- | --- | --- | --- | --- | --- | --- | --- | --- |
| | Material | Lens Pitch LPI | Transparent Image Portion / Lens Width (%) | Image Groups | Character | Presence/ Absence | Structure | Residual Density (%) | Image Viewability |
| Example 1 | Glycol Modified PET | 100 | 18% | 2 types | present | present | Inorganic Multilayer Film 1 | 25 | A |
| Example 2 | Glycol Modified PET | 100 | 25% | 2 types | present | present | Inorganic Multilayer Film 1 | 40 | B |
| Example 3 | Glycol Modified PET | 100 | 12% | 3 types | present | present | Inorganic Multilayer Film 1 | 28 | A |
| Example 4 | Glycol Modified PET | 100 | 18% | 2 types | absent | present | Inorganic Multilayer Film 1 | 20 | A |
| Example 5 | Glycol Modified PET | 100 | 18% | 2 types | present | present | Inorganic Multilayer Film 2 | 24 | A |
| Example 6 | Acrylic Resin | 100 | 18% | 2 types | present | present | Inorganic Multilayer Film 1 | 22 | A |
| Example 7 | Glycol Modified PET | 200 | 18% | 2 types | present | present | Inorganic Multilayer Film 1 | 28 | A |
| Example 8 | Glycol Modified PET | 100 | 30% | 2 types | present | present | Inorganic Multilayer Film 1 | 35 | B |
| Example 9 | Glycol Modified PET | 100 | 3% | 2 types | present | present | Inorganic Multilayer Film 1 | 42 | C |
| Example 10 | Glycol Modified PET | 100 | 10% | 2 types | present | present | Inorganic Multilayer Film 1 | 35 | B |

| Examples | Lenticular Lens | | Lenticular Image | | | Anti-Reflection Layer | | Evaluation | |
|---|---|---|---|---|---|---|---|---|---|
| | Material | Lens Pitch LPI | Transparent Image Portion / Lens Width (%) | Image Groups | Character | Presence/ Absence | Structure | Residual Density (%) | Image Viewability |
| Example 11 | Glycol Modified PET | 100 | 20% | 2 types | present | present | Inorganic Multilayer Film 1 | 18 | A |
| Example 12 | Glycol Modified PET | 100 | 45% | 2 types | present | present | Inorganic Multilayer Film 1 | 7 | C |
| Comparative Example 1 | Glycol Modified PET | 100 | absent (0%) | 2 types | present | absent | White Ink Application | 50 | E |
| Comparative Example 2 | Glycol Modified PET | 100 | absent (0%) | 2 types | present | absent | Paper Affixing | 55 | E |
| Comparative Example 3 | Glycol Modified PET | 100 | present (30%) | 2 types | present | absent | - | 45 | D |
| Comparative Example 4 | Glycol Modified PET | 100 | absent (0%) | 2 types | present | present | Inorganic Multilayer Film | 49 | D |

As can be seen from Table 1, stray light was generated in the lenticular lens and overlapping of images could not be suppressed in the following comparative examples: comparative example 1, in which the transparent-slit image strip was not provided and, white ink, instead of the anti-reflection layer, was applied to the back surface of the lenticular image; and comparative example 2, in which the transparent-slit image strip was not provided and, a sheet of paper, instead of the anti-reflection layer, was affixed to the back surface of the lenticular image. Therefore, compared with the Examples, the image viewability was low.

Likewise, compared with the Examples, the image viewability was low in the following comparative examples: comparative example 3, in which the transparent-slit image strip was provided but the anti-reflection layer was not provided; and comparative example 4, in which the anti-reflection layer was provided but the transparent-slit image strip was not provided.

The entire contents disclosed in JP2016-190293 filed on September 28, 2016 is incorporated herein by reference.

All documents, patent applications, and technical standards mentioned in the present specification are incorporated herein by reference to the same extent as in the case where the individual documents, patent applications, and technical standards are specifically and individually described as being incorporated herein by reference.

Reference Signs List

| | |
|---|---|
| 10, 30, 50, 100 | lenticular display |
| 12, 32, 52, 102 | convex lens |
| 12A | front surface |
| 12B, 32B, 52B | back surface |
| 14, 34, 54, 104 | lenticular lens |
| 14A | front surface |
| 14B, 34B, 54B | back surface |
| 16, 36, 56, 106 | lenticular image |
| 18, 58 | film |
| 18A, 58A | front surface |
| 18B, 58B | back surface |
| 20, 40, 60 | display image strip |
| 22, 42, 62 | display image strip |
| 24, 44, 64 | transparent-slit image strip |
| 26, 46, 66 | anti-reflection layer |
| 26A | high-refractive-index film |
| 26B | low-refractive-index film |
| 46A | hollow silica particle |
| 66A | protrusion |
| 108 | sheet of paper |

**Claims**

1. A lenticular display comprising:

a lenticular lens in which a plurality of convex lenses are arranged in parallel, each of the convex lenses having a convex front surface;
a lenticular image provided on a back surface side of each of the convex lenses, the back surface being a surface of the convex lens opposite to the front surface; and
an anti-reflection layer provided on a back surface side of the lenticular image, the back surface being a surface of the lenticular image opposite to a front surface of the lenticular image facing the lenticular lens,
wherein the lenticular image includes

a plurality of display image strips that are extracted each in a stripe shape from a plurality of display images and that are arranged at corresponding positions on the back surface side of each of the convex lenses, and
a transparent-slit image strip that is provided between each pair of the plurality of display image strips that are adjacent to each other and that are extracted from the display images that differ from each other.

2. The lenticular display according to claim 1, wherein a residual density of the display images is 0% or higher and 40% or lower.

3. The lenticular display according to claim 1 or 2, wherein a width of the transparent-slit image strip in an arrangement direction is 5% or larger and 50% or smaller of a width of each of the convex lenses in a parallel-arrangement direction.

4. The lenticular display according to any one of claims 1 to 3, wherein the plurality of display images each include a character.

5. The lenticular display according to any one of claims 1 to 4, wherein the lenticular image is formed on a recording medium that is bonded to a back surface of the lenticular lens.

6. The lenticular display according to any one of claims 1 to 4, wherein the lenticular image is formed on a back surface of the lenticular lens.

7. A method of manufacturing a lenticular display, comprising:

a step of forming a lenticular image by arranging a plurality of display image strips, which are extracted each in a stripe shape from a plurality of display images, at corresponding positions and by providing a transparent-slit image strip between each pair of the plurality of display image strips that are adjacent to each other and that are extracted from the display images that differ from each other;
a step of providing the lenticular image on a back surface side of a lenticular lens in which a plurality of convex lenses are arranged in parallel, each of the convex lenses having a convex front surface, the back surface being a surface of the lenticular lens opposite to the front surface; and
a step of providing an anti-reflection layer on a back surface side of the lenticular image, the back surface being a surface of the lenticular image opposite to a front surface of the lenticular image facing the lenticular lens.

8. The method of manufacturing a lenticular display according to claim 7, wherein a width of the transparent-slit image strip in an arrangement direction is 5% or larger and 50% or smaller of a width of each of the convex lenses in a parallel-arrangement direction.

9. The method of manufacturing a lenticular display according to claim 7 or 8, wherein the plurality of display images each include a character.

10. The method of manufacturing a lenticular display according to any one of claims 7 to 9, wherein the lenticular image is formed on a front surface of a recording medium, and the front surface of the recording medium and the back surface of the lenticular lens are affixed to each other.

11. The method of manufacturing a lenticular display according to any one of claims 7 to 9, wherein the lenticular image is formed on the back surface of the lenticular lens.

FIG. 1

# FIG. 2

# FIG. 3

10

Z

X

12     12     14

14B

16

20 24 22

18A     18

18B

26A
26B  26

# FIG. 4

# FIG. 5

## FIG. 6

A

B

S

S

n

n

## FIG. 7

An

Bn

# FIG. 8

## INTERNATIONAL SEARCH REPORT

| International application No. |
| --- |
| PCT/JP2017/027719 |

A. CLASSIFICATION OF SUBJECT MATTER
*G02B3/00*(2006.01)i, *G02B27/22*(2006.01)i, *G03B35/00*(2006.01)i

According to International Patent Classification (IPC) or to both national classification and IPC

B. FIELDS SEARCHED

Minimum documentation searched (classification system followed by classification symbols)
G02B3/00, G02B27/22, G03B35/00

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 11-95168 A (Toppan Printing Co., Ltd.), 09 April 1999 (09.04.1999), paragraph [0008]; fig. 3, 4 (Family: none) | 1-11 |
| A | US 2009/0034082 A1 (De La Rue International Ltd.), 05 February 2009 (05.02.2009), paragraphs [0068] to [0141]; fig. 4 to 42 (Family: none) | 1-11 |
| A | JP 4-88338 A (Fuji Photo Film Co., Ltd.), 23 March 1992 (23.03.1992), page 2, lower right column, line 17 to page 4, upper left column, line 1; fig. 1 (Family: none) | 1-11 |

|☒| Further documents are listed in the continuation of Box C. | |☐| See patent family annex.

\*    Special categories of cited documents:
"A"   document defining the general state of the art which is not considered   to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| 08 September 2017 (08.09.17) | 19 September 2017 (19.09.17) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
| --- | --- |

Form PCT/ISA/210 (second sheet) (January 2015)

**INTERNATIONAL SEARCH REPORT**

International application No.

PCT/JP2017/027719

| | C (Continuation). DOCUMENTS CONSIDERED TO BE RELEVANT | |
|---|---|---|
| Category* | Citation of document, with indication, where appropriate, of the relevant passages | Relevant to claim No. |
| A | JP 2015-194732 A (Enplas Corp.), 05 November 2015 (05.11.2015), paragraphs [0010] to [0065]; fig. 1 to 8 & US 2017/0082843 A1 paragraphs [0020] to [0084]; fig. 1A to 8A | 1-11 |
| A | JP 11-95167 A (Sanyo Electric Co., Ltd.), 09 April 1999 (09.04.1999), paragraphs [0022] to [0034]; fig. 2, 3 (Family: none) | 1-11 |
| A | JP 9-230516 A (Eastman Kodak Co.), 05 September 1997 (05.09.1997), paragraphs [0035] to [0043]; fig. 10, 11 & US 5639580 A column 8, line 34 to column 10, line 52; fig. 10, 11 | 1-11 |
| A | JP 2014-519424 A (De La Rue International Ltd.), 14 August 2014 (14.08.2014), paragraphs [0033] to [0076]; fig. 10 to 32 & WO 2012/153106 A1 page 10, line 14 to page 20, line 6; fig. 10 to 32 | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11095168 A
- JP H11095168 A
- JP 5500478 B
- JP 2016190293 A